# EUROPÄISCHE PATENTSCHRIFT

(11) **EP 2 574 486 B1**
(45) Veröffentlichungstag und Bekanntmachung des Hinweises auf die Patenterteilung: **05.11.2014**
(21) Anmeldenummer: 12172632.7
(22) Anmeldetag: 19.06.2012
(51) Int. Cl.: B60K 15/067, B62D 25/08, B62D 25/20

(54) **Abstützung eines Behälters eines Kraftfahrzeugs**
Support of a container of a motor vehicle
Soutien d'un récipient d'un véhicule automobile

(30) Priorität: 30.09.2011 DE 102011083889
(43) Veröffentlichungstag der Anmeldung: 03.04.2013
(73) Patentinhaber: Bayerische Motoren Werke Aktiengesellschaft, 80809 München (DE)
(72) Erfinder: Wettlaufer, Björn, 80997 München (DE); Koch, Benjamin, 81369 München (DE); Drescher, Andre, 06237 Leuna (DE)

(56) Entgegenhaltungen:
- DE-A1- 19 527 335
- DE-A1-102009 049 212
- GB-A- 2 160 834
- US-A1- 2008 078 598

## Beschreibung

Die Erfindung betrifft eine Abstützung eines Behälters eines Kraftfahrzeugs, mit den im Oberbegriff des Patentanspruches 1 angegebenen Merkmalen.

Eine derartige Abstützung eines Behälters sieht in der EP 1 612 127 A2 im hinteren Bereich eines Kraftfahrzeugs eine vertikale Durchgangsöffnung vor, die vorne von einem Querträger und seitlich von Längsträgern der Karosserie des Kraftfahrzeugs begrenzt ist. In die vertikale Durchgangsöffnung ist ein über den Umfang geschlossener Rahmen eingebracht, der im Randbereich der Durchgangsöffnung abgestützt ist. Der Rahmen weist eine vertikal durchgehende Öffnung auf, die zumindest bereichsweise mit der Durchgangsöffnung fluchtet. Ein in die Öffnung des Rahmens eingesteckter und an dem Rahmen befestigter Behälter durchsetzt zumindest bereichsweise die Durchgangsöffnung. Der Behälter ist oben offen ausgebildet und bildet einen vertieften Bereich des Gepäckraumbodens, in den Gegenstände von oben eingebracht werden können. Lose in den Behälter eingebrachte Gegenstände können insbesondere bei Beschleunigungen oder Verzögerungen des Kraftfahrzeugs oder beim Überfahren von Bodenunebenheiten an wenigsten einem Wandbereich des Behälters geräuschvoll anschlagen. Die dabei verursachten Geräusche können auf Grund einer festen Abstützung des Behälters an dem Rahmen und des Rahmens an der Karosserie auf die Karosserie des Kraftfahrzeugs übertragen werden und sind eventuell im Fahrgastraum des Kraftfahrzeugs störend wahrnehmbar.

Der Erfindung liegt die Aufgabe zu Grunde, eine Abstützung eines Behälters eines Kraftfahrzeugs mit den im Oberbegriff des Patentanspruches 1 anzugeben, die eine Verwendung unterschiedlicher Behälter ermöglicht und einen verwendeten Behälter günstiger gegenüber der Karosserie des Kraftfahrzeugs abstützt.

Diese Aufgabe ist durch die Merkmale im Patentanspruch 1 gelöst. Vorteilhafte Ausgestaltungen der Erfindung sind den Unteransprüchen entnehmbar.

Die Abstützung eines Behälters eines Kraftfahrzeugs weist eine vertikale Durchgangsöffnung im hinteren Bereich des Kraftfahrzeugs auf, die seitlich jeweils von einem Längsträger der Karosserie begrenzt ist. Mit einem über den Umfang geschlossenen Rahmen, der im Randbereich der Durchgangsöffnung befestigt bzw. abgestützt ist. Sowie mit einer vertikal durchgehenden Öffnung im Rahmen, die zumindest bereichsweise mit der Durchgangsöffnung fluchtet. Ein in die Öffnung des Rahmens eingesteckter und an dem Rahmen befestigter Behälter durchsetzt zumindest bereichsweise die Durchgangsöffnung. Der Behälter ist an mehreren voneinander entfernten Befestigungsstellen über elastische und zumindest etwas schwingungsdämpfende Stützkörper an dem Rahmen elastisch und schwingungsdämpfend abgestützt. Auf diese Weise kann der Behälter feste und/oder flüssige Stoffe bzw. Materialien aufnehmen, ohne dass zu befürchten ist, dass die eventuell beweglichen Stoffe oder Materialien durch Eigenbewegungen im Fahrbetrieb des Kraftfahrzeugs störende Geräusche auf die Karosserie des Kraftfahrzeugs übertragen. Beispielsweise kann der Behälter offen oder allseitig geschlossen ausgebildet sein und einen Kraftstofftank oder wenigstens einen Hochvoltspeicher oder einen Behälter für ein kathalytisches Reduktionsmittel zur Behandlung und Verbesserung der Abgase des Fahrzeugmotors oder einen Behälter für ein gasförmiges oder flüssiges Gas oder Wasserstoff oder einen Reformer, der für die Umwandlung von Benzin in Wasserstoff benötigt wird, bilden oder enthalten.

Ein Ausführungsbeispiel der Erfindung wird anhand einer Zeichnung näher erläutert. Es zeigen
- Fig. 1: ein vereinfachter Querschnitt durch eine Befestigungsstelle einer Abstützung eines Behälters eines Kraftfahrzeugs,
- Fig. 2: ein vereinfachte Draufsicht auf den Behälter und seine Abstützung und
- Fig. 3: eine vergrößerte Einzelheit III in Fig. 1.

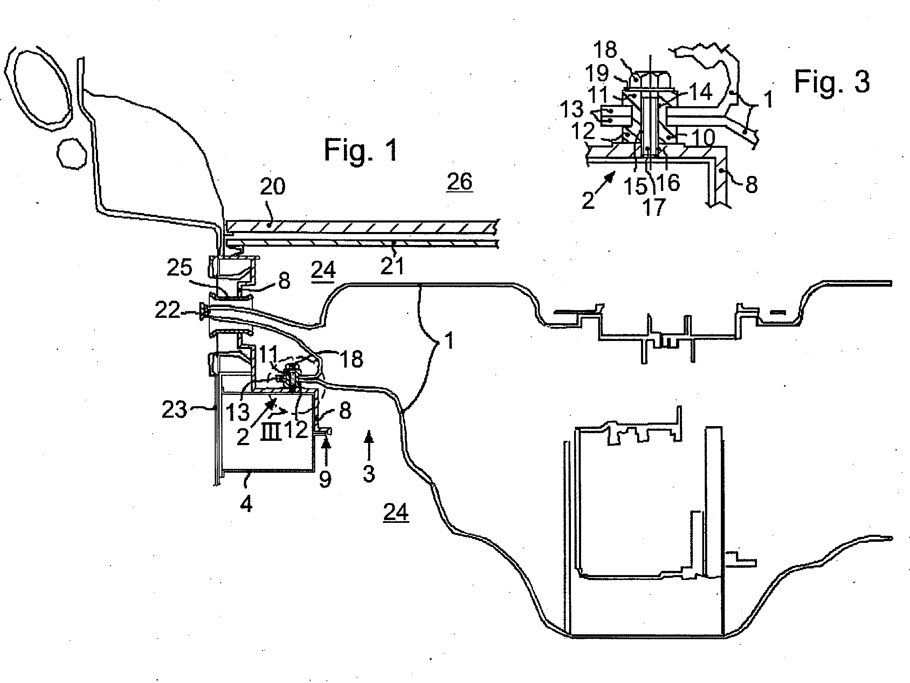

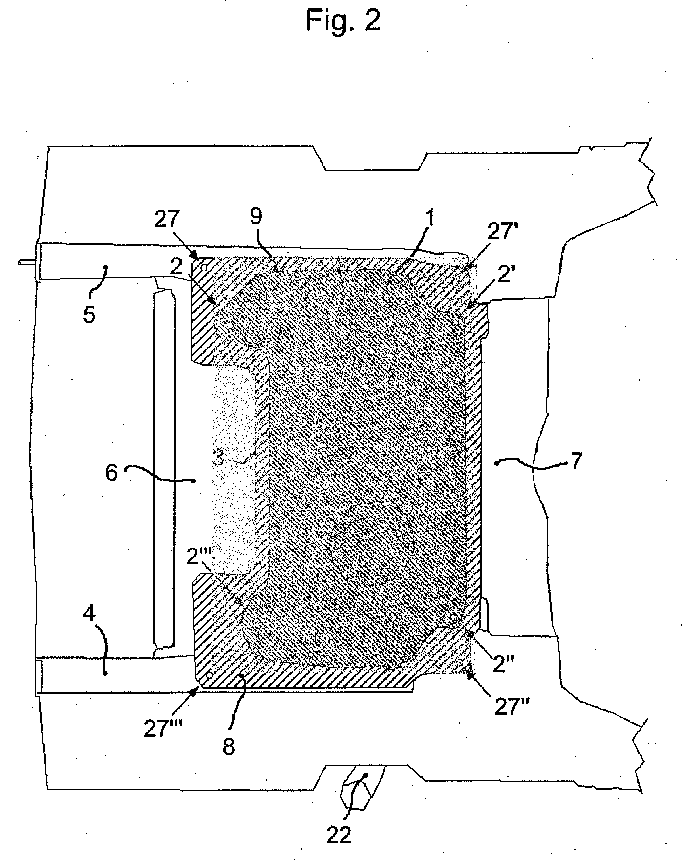

In Figur 1 ist eine Abstützung eines Behälters 1 eines Kraftfahrzeugs in einem vereinfachten Querschnitt durch eine in Fig. 3 vergrößert dargestellte Befestigungsstelle 2 der bei dem Ausführungsbeispiel vier Befestigungsstellen 2, 2', 2", 2"' aufweisenden Abstützung des Behälters 1 dargestellt. Die in Fig. 3 vergrößert dargestellte Befestigungsstelle 2 ist in Fig. 1 in Normalgröße dargestellt. Die anderen drei Befestigungsstellen 2', 2", 2'" sind in Fig. 2 jeweils durch einen Kreis vereinfacht dargestellt. Im hinteren Bereich des Kraftfahrzeugs ist eine vertikale Durchgangsöffnung 3 ausgebildet, die bei dem Ausführungsbeispiel seitlich jeweils von einem Längsträger 4, 5 und vorne und hinten jeweils von einem Querträger 6, 7 jeweils der Karosserie des Kraftfahrzeugs begrenzt ist. Die Abstützung weist einen über den Umfang geschlossenen Rahmen 8 auf, der im Randbereich der Durchgangsöffnung 3 beispielsweise bei 27, 27', 27", 27"' bei dem Ausführungsbeispiel an den Längsträgern 4, 5 der Karosserie des Kraftfahrzeugs beispielsweise unter Verwendung von nicht dargestellten Befestigungsmitteln befestigt bzw. ortsfest abgestützt ist.

Der über einen Umfang geschlossene, ecksteife Rahmen 8 wirkt als Verstärkungsteil, das einen mit der Ausbildung der Durchgangsöffnung 3 in der Karosserie verbundenen Steifigkeitsverlust der Karosserie ausgleicht oder zumindest wesentlich vermindert. Der Rahmen 8 weist eine vertikal durchgehende Öffnung 9 auf, die zumindest bereichsweise mit der Durchgangsöffnung 3 in der Karosserie fluchtet.

Der Behälter 1 ist von oben in die Öffnung 9 des Rahmens 8 eingesteckt und derart am Rahmen 8 befestigt, dass der Behälter 1 zumindest bereichsweise die Durchgangsöffnung 3 in der Karosserie durchsetzt. Bei dem Ausführungsbeispiel ist der Behälter 1 an zumindest vier voneinander entfernten Befestigungsstellen 2, 2', 2", 2'" bei dem Ausführungsbeispiel an den in Fig. 2 erkennbaren Eckbereichen in etwa gleicher Weise jeweils über wenigstens einen in Fig. 1 in Normalgröße und in Fig. 3 vergrößert dargestellten elastischen und zumindest etwas schwingungsdämpfenden Stützkörper 10 an dem Rahmen 8 elastisch und schwingungsdämpfend abgestützt.

Der bei dem Ausführungsbeispiel im Wesentlichen aus einem Elastomer bzw. Gummi bzw. Naturkautschuk gebildete Stützkörper 10 ist bei dem Ausführungsbeispiel in einem axial mittleren Bereich zylindrisch und an seinen Stirnbereichen 11, 12 radial erweitert, im vorliegenden Fall ebenfalls zylindrisch ausgebildet ist. Der Stützkörper 10 bewirkt eine akustische Entkoppelung, die eine Schallübertragung beispielsweise von dem Behälter bzw. von darin oder daran beweglich abgestützten Bauteilen auf die Karosserie des Kraftfahrzeugs verhindert oder zumindest wesentlich reduziert.

Der Behälter 1 weist bei dem Ausführungsbeispiel jeweils im Bereich einer Befestigungsstelle 2, 2', 2", 2'" einen abstehenden Flansch 13 mit einer durchgehenden Stützöffnung 14 auf, wobei der Flansch 13 axial zwischen den radial erweiterten Stirnbereichen 11, 12 des betreffenden elastischen Stützkörpers 10 derart angeordnet ist, dass der axial mittleren Bereich des Stützkörpers 10 die Stützöffnung 14 im Flansch 13 mit keinem oder einem beispielsweise geringen radialen Spiel durchsetzt.

Bei dem Ausführungsbeispiel ist jeder Stützkörper 10 rohrförmig mit einer axial durchgehenden Befestigungsöffnung 15 ausgebildet, die von einer in ein Gewinde 16 im Rahmen 8 einschraubbaren Befestigungsschraube 17 axial durchsetzt ist. Jeweils der Schraubenkopf 18 der Befestigungsschraube 17 oder ein zwischengelegtes Zwischenteil, bei dem Ausführungsbeispiel eine Unterlagscheibe 19, belastet den Stützkörper 10 beim Anziehen der Befestigungsschraube 17 axial gegen den Rahmen 8, wodurch sich eventuell der Durchmesser des Stützkörpers 10 radial etwas aufweitet. Dadurch kann der Stützkörper 10 eventuell radial von innen gegen die Befestigungsöffnung 15 im betreffenden Flansch 13 des Behälters 1 gedrückt und - falls dies gewünscht ist - radial vorgespannt werden. Die Abstützung ist so ausgebildet bzw. angeordnet, dass sie auch im Fahrbetrieb des Kraftfahrzeugs ein hartes Anschlagen des Behälters 1 an benachbarten Teilen, beispielsweise am Rahmen 8 oder an einem die Durchgangsöffnung 3 abdeckenden oder wasserdicht verschließenden Deckel 21 verhindert.

Die Dicke des Flansches 13 ist jeweils im Bereich einer Befestigungsstelle 2, 2', 2", 2'" an den axialen Abstand der radial erweiterten Stirnbereiche 11, 12 des Stützkörpers 10 beispielsweise spielfrei angepasst.

Der Behälter 1 ist zumindest bereichsweise unter einem hinteren Gepäckraumboden 20 des Kraftfahrzeugs angeordnet und bei dem Ausführungsbeispiel vollständig von einem unter dem Gepäckraumboden 20 und über dem Behälter 1 angeordneten Deckel 21 wasserdicht überdeckt.

Der Behälter 1 ist bei dem Ausführungsbeispiel allseitig geschlossen ausgebildet und bildet oder enthält beispielsweise einen Kraftstofftank oder wenigstens einen Hochvoltspeicher oder einen Behälter für ein kathalytisches Reduktionsmittel zur Behandlung und Verbesserung der Abgase des Fahrzeugmotors oder einen Behälter für ein gasförmiges oder flüssiges Gas oder Wasserstoff oder einen Reformer, der für die Umwandlung von Benzin in Wasserstoff benötigt wird.

Bei dem Ausführungsbeispiel ist der Behälter 1 ein Kraftstoffbehälter, in den seitlich eine mit dem Behälter 1 fest verbundene Kraftstoffleitung 22 mündet. Der Behälter 1 ist von einem Nassraum 24 umgeben, in dem sich witterungsbedingt Feuchtigkeit befinden kann. Damit keine Kraftstoffausdünstungen aus dem Behälter 1 in das Fahrzeuginnere gelangen können, ist ein beispielsweise elastisches Abdeckelement 25 verwendet, das den Zwischenraum zwischen einer jeweils von der Kraftstoffleitung durchdrungenen Öffnung im Rahmen 8 und einer damit fluchtenden Radhausöffnung in einer seitlichen Radhauswand 23 abdeckt und abdichtet.

Die Durchgangsöffnung 3 in der Karosserie kann im Wesentlichen vor, über oder hinter der Hinterachse des Kraftfahrzeugs ausgebildet sein. Ist die Durchgangsöffnung im Wesentlichen vor der Hinterachse ausgebildete, so kann sie hinten von einem mit den Längsträgern verbundenen Querträger begrenzt sein. Ist dagegen die Durchgangsöffnung im Wesentlichen hinter der Hinterachse ausgebildet, so kann sie vorne von einem mit den Längsträgern verbundenen Querträger begrenzt sein. Eine beispielsweise im Wesentlichen über der Hinterachse ausgebildete Durchgangsöffnung 3 kann vorne und/oder hinten jeweils von einem mit den Längsträgern 4, 5 verbundenen Querträger 6, 7 begrenzt sein. Dies ist zwar jeweils bevorzugt, jedoch nicht zwingend erforderlich. Bei dem Ausführungsbeispiel kann an den Behälter 1 von unten und seitlich sowie eventuell bis über den Behälter 1 Feuchtigkeit gelangen. Eine feuchtigkeitsdichte Abdichtung nach oben beispielsweise gegenüber einem oberen Gepäckraum 26 erfolgt bei dem Ausführungsbeispiel über den unter dem Gepäckraum 26 und über dem geschlossenen Behälter 1 angeordneten Deckel 21, der gegenüber Umgebungswänden der Karosserie feuchtigkeitsdicht abgedichtet ist.

Die Erfindung kann selbstverständlich von dem einzigen Ausführungsbeispiel abweichend ausgeführt werden. Der Behälter ist beispielsweise unter Verwendung von vorzugsweise lösbaren oder unlösbaren Befestigungsmitteln an vorgebbaren, voneinander entfernten Befestigungsstellen über elastische und zumindest etwas schwingungsdämpfende Stützkörper an dem Rahmen elastisch und schwingungsdämpfend abgestützt. Der Stützkörper kann aus einem beliebigen elastischen und zumindest etwas schwingungsdämpfenden Material beispielsweise im Wesentlichen aus einem Elastomer bzw. Gummi bzw. Naturkautschuk gebildet sein. Die Form des Stützkörpers kann an sich beliebig vorgegeben werden. Der Behälter kann auch von einem unter dem Behälter angeordneten Deckel von unten, beispielsweise wasserdicht abgedeckt sein. Der Behälter kann eine beliebige Form aufweisen und beispielsweise bereichsweise oder insgesamt offen oder geschlossen ausgebildet sein. Beispielsweise ist der Behälter allseitig geschlossen ausgebildet und bildet oder enthält einen Kraftstofftank oder wenigstens einen Hochvoltspeicher oder einen Behälter für ein kathalytisches Reduktionsmittel zur Behandlung und Verbesserung der Abgase des Fahrzeugmotors oder einen Behälter für ein gasförmiges oder flüssiges Gas oder Wasserstoff oder einen Reformer, der für die Umwandlung von Benzin in Wasserstoff benötigt wird. Die Durchgangsöffnung kann im Wesentlichen vor, über oder hinter der Hinterachse des Kraftfahrzeugs ausgebildet sein. Der Stützkörper kann rohrförmig ausgebildet und beispielsweise von einer von dem Rahmen abstehenden oder in ein Gewinde im Rahmen einschraubbaren Befestigungsschraube axial durchsetzt sein, wobei entweder ein Schraubenkopf oder eine auf die Befestigungsschraube aufschraubbare Gewindemutter oder ein zwischengelegtes Zwischenteil den Stützkörper axial gegen den Rahmen oder ein am Rahmen zumindest mittelbar abgestütztes Zwischenelement belastet. Mit der erfindungsgemäßen Abstützung sind eine akustische Entkopplung des Behälters von der Karosserie des Kraftfahrzeugs, eine Trennung eines Feuchtraumes von einem Trockenraum und eine zumindest teilweise Kompensation des mit der Ausbildung der Durchtrittsöffnung verbundenen Steifigkeitsverlustes durch die Verwendung des Rahmens erreichbar. Bei Verwendung eines den Behälter von oben oder unten abdeckenden Deckels kann der Deckel ein separates Bauteil sein. Ein den Behälter von oben abdeckender Deckel kann auch mit einem Bodenteil, beispielsweise einem Gepäckraumboden, verbunden oder durch ein Bodenteil, beispielsweise einen Gepäckraumboden, gebildet sein.

## Patentansprüche

1. Abstützung eines Behälters eines Kraftfahrzeugs, mit einer vertikalen Durchgangsöffnung im hinteren Bereich des Kraftfahrzeugs, die seitlich jeweils von einem Längsträger der Karosserie begrenzt ist, und mit einem über den Umfang geschlossenen Rahmen, der im Randbereich der Durchgangsöffnung befestigt bzw. abgestützt ist, mit einer vertikal durchgehenden Öffnung im Rahmen, die zumindest bereichsweise mit der Durchgangsöffnung fluchtet, wobei ein in die Öffnung des Rahmens eingesteckter und an dem Rahmen befestigter Behälter zumindest bereichsweise die Durchgangsöffnungdurchsetzt, **dadurch gekennzeichnet, dass** der Behälter (1) an mehreren, voneinander entfernten Befestigungsstellen (2, 2', 2", 2"') über elastische und zumindest etwas schwingungsdämpfende Stützkörper (10) an dem Rahmen (8) elastisch und schwingungsdämpfend abgestützt ist.

2. Abstützung nach Anspruch 1, **dadurch gekennzeichnet, dass** ein Stützkörper (10) im Wesentlichen aus einem Elastomer bzw. Gummi bzw. Naturkautschuk gebildet ist.

3. Abstützung nach Anspruch 1 oder 2, **dadurch gekennzeichnet, dass** ein Stützkörper (10) rohrförmig ausgebildet und von einer von dem Rahmen abstehenden oder in ein Gewinde (16) im Rahmen (8) einschraubbaren Befestigungsschraube (17) axial durchsetzt ist, wobei entweder ein Schraubenkopf (18) oder eine auf die Befestigungsschraube aufschraubbare Gewindemutter oder ein zwischengelegtes Zwischenteil (19) den Stützkörper (10) axial gegen den Rahmen (8) oder ein am Rahmen zumindest mittelbar abgestütztes Zwischenelement belastet.

4. Abstützung nach einem der Ansprüche 1 bis 3, **dadurch gekennzeichnet, dass** ein Stützkörper (10) in einem axial mittleren Bereich zylindrisch und an seinen Stirnbereichen (11, 12) radial erweitert, beispielsweise ebenfalls zylindrisch ausgebildet ist, und der Behälter (1) zumindest in einem Bereich einer Befestigungsstelle (2, 2', 2", 2"') einen abstehenden Flansch (13) mit einer durchgehenden Stützöffnung (14) aufweist, und der Flansch (13) axial zwischen den radial erweiterten Stirnbereichen (11,m 12) eines zugeordneten Stützkörpers (10) derart angeordnet ist, dass der axial mittleren Bereich des Stützkörpers (10) die Stützöffnung (14) im Flansch (13) mit keinem oder einem radialen Spiel durchsetzt.

5. Abstützung nach Anspruch 4, **dadurch gekennzeichnet, dass** die Dicke des Flansches (13) zumindest im Bereich einer Befestigungsstelle (2, 2', 2", 2"') an den axialen Abstand der radial erweiterten Stirnbereiche (11,12) des Stützkörpers (10) an der Befestigungsstelle (2, 2', 2", 2"') angepasst ist.

6. Abstützung nach einem der Ansprüche 1 bis 5, **dadurch gekennzeichnet, dass** der Behälter (1) zumindest bereichsweise unter einem hinteren Gepäckraum (26) des Kraftfahrzeugs angeordnet und zumindest bereichsweise von einem unter dem Gepäckraumboden (20) angeordneten Deckel (21) von oben oder von unten beispielsweise wasserdicht überdeckt ist.

7. Abstützung nach einem der Ansprüche 1 bis 6, **dadurch gekennzeichnet, dass** der Behälter (1) allseitig geschlossen ausgebildet ist und einen Kraftstofftank oder wenigstens einen Hochvoltspeicher oder einen Behälter für ein kathalytisches Reduktionsmittel zur Behandlung und Verbesserung der Abgase des Fahrzeugmotors oder einen Behälter für ein gasförmiges oder flüssiges Gas oder Wasserstoff oder einen Reformer, der für die Umwandlung von Benzin in Wasserstoff benötigt wird, bildet oder enthält.

8. Abstützung nach einem der Ansprüche 1 bis 7, **dadurch gekennzeichnet, dass** der Behälter (1) ein Kraftstoffbehälter ist, der von einem Nassraum (24) umgeben ist, in dem sich witterungsbedingt Feuchtigkeit befinden kann.

9. Abstützung nach einem der Ansprüche 1 bis 8, **dadurch gekennzeichnet, dass** der Behälter (1) ein Kraftstoffbehälter ist, in den eine Kraftstoffleitung (22) mündet, die eine Öffnung im Rahmen (8) und eine damit fluchtende Radhausöffnung in einer seitlichen Radhauswand (23) durchdringt, mit einem beispielsweise elastischen Abdeckelement (25), das den Zwischenraum zwischen der Öffnung im Rahmen (8) und der damit fluchtenden Radhausöffnung in der seitlichen Radhauswand (23) abdeckt und abdichtet und dadurch verhindert, dass eventuelle Ausdünstungen des Behälters (1) in das Fahrzeuginnere gelangen.

10. Abstützung nach einem der Ansprüche 1 bis 9, **dadurch gekennzeichnet, dass** die Durchgangsöffnung (3) im Wesentlichen vor, über oder hinter der Hinterachse des Kraftfahrzeugs ausgebildet ist.

11. Abstützung nach einem der Ansprüche 1 bis 10, **dadurch gekennzeichnet, dass** die im Wesentlichen vor der Hinterachse ausgebildete Durchgangsöffnung zumindest hinten von einem mit den Längsträgern verbundenen Querträger begrenzt ist, oder die im Wesentlichen hinter der Hinterachse ausgebildete Durchgangsöffnung zumindest vorne von einem mit den Längsträgern verbundenen Querträger begrenzt ist, oder die im Wesentlichen über der Hinterachse ausgebildete Durchgangsöffnung (3) vorne und/oder hinten jeweils von einem mit den Längsträgern (4, 5) verbundenen Querträger (6, 7) begrenzt ist.

## Claims

1. A support for a container in a motor vehicle comprising a vertical passage opening in the rear region of the vehicle and bounded at both sides by a longitudinal bearer of the body, and a frame closed round its circumference and fastened or supported in the edge region of the passage opening, and a vertical opening through the frame and aligned with the passage opening in at least some places, wherein a container inserted into the frame opening and fastened to the frame extends through the passage opening at least at some places, **characterised in that** the container (1), at a number of spaced-apart places (2, 2', 2", 2"'), is supported resiliently and in vibration-reducing manner by resilient supporting members (10) on the frame (8), which reduce vibration at least to some extent.

2. A support according to claim 1, **characterised in that** a supporting member (10) is made substantially from an elastomer or rubber or natural rubber.

3. A support according to claim 1 or claim 2, **characterised in that** a supporting member (10) is tubular and is axially extended through by a screw (17) projecting from the frame or screwable into a screw thread (16) in the frame (8), wherein either a screw head (18) or a threaded nut screwable on to the screw, or an intermediate part (19) axially biases the supporting member (10) against the frame (8) or against an intermediate element supported at least indirectly on the frame.

4. A support according to any of the claims 1 to 3, **characterised in that** a supporting member (10) is cylindrical in an axially central region (11, 12) and radially widens at its edge regions, e.g. likewise in cylindrical manner, and the container (1), at least in one region of a fastening place (2, 2', 2", 2"'), has a projecting flange (13) with a supporting opening (14) through it, and the flange (13) is disposed axially between the radially widening end regions (11, 12) of an associated supporting member (10) so that the axially central region of the supporting member (10) extends through the supporting opening (14) in the flange (13) with little or no radial clearance.

5. A support according to claim 4, **characterised in that** the thickness of the flange (13), at least in the region of a fastening place (2, 2', 2", 2"'), is adapted to the axial spacing between the radially widening edge regions (11, 12) of the supporting member (10) at the fastening place (2, 2', 2", 2").

6. A support according to any of claims 1 to 5, **characterised in that** the container (1), or at least parts of it, is disposed under a rear luggage compartment (26) of the vehicle and at least in some places is covered above or below, e.g. in watertight manner, by a lid (21) disposed under the luggage compartment (20).

7. A support according to any of claims 1 to 6, **characterised in that** the container (1) is closed on all sides and forms or contains a fuel tank or at least one high-voltage reservoir or a container for a catalytic reducing agent for treatment and improvement of the engine exhaust gases or a container for a gaseous or liquid gas or hydrogen or a reformer for converting petrol into hydrogen.

8. A support according to any of claims 1 to 7, **characterised in that** the container (1) is a fuel container surrounded by a wet space (24) which can contain moisture, depending on the weather.

9. A support according to any of claims 1 to 8, **characterised in that** the container (1) is a fuel container into which a fuel pipe (22) opens and extends through an opening in the frame (8) and an aligned opening in the wheel house in a lateral wheel-house wall (23), comprising an e.g. resilient covering element (25) which covers and seals the space between the opening in the frame (8) and the aligned opening in the lateral wheel-house wall (23) and thus prevents any vapour from the container (1) entering the vehicle.

10. A support according to any of claims 1 to 9, **characterised in that** the passage opening (3) is formed substantially in front of, above or behind the rear axle of the vehicle.

11. A support according to any of claims 1 to 10, **characterised in that** the passage opening, formed substantially in front of the rear axle, is bounded at least behind by a transverse member connected to the longitudinal members, or the passage opening formed substantially behind the rear axle is bounded at least in front by a transverse member connected to the longitudinal members, or the passage opening (3) formed substantially over the rear axle is bounded in front and/or behind, in each case by a transverse member (6, 7) connected to the longitudinal members (4, 5).

## Revendications

1. Appui de réservoir de véhicule automobile comportant un orifice traversant, vertical dans la région arrière du véhicule, cet orifice étant délimité latéralement par un longeron de la carrosserie et un cadre périphérique fermé fixé ou appuyé dans la région de bord de l'orifice traversant, une ouverture verticale passant, dans le cadre qui est au moins par zone, alignée avec l'orifice traversant,
- un récipient engagé dans l'ouverture du cadre et fixé au cadre, passe
au moins par zone dans l'orifice traversant,
appui **caractérisé en ce que**
le réservoir (1) est appuyé en plusieurs emplacements de fixation (2, 2', 2", 2'"), écartés les uns des autres par des organes d'appui (10) élastiques et au moins dans une certaine mesure amortissant les vibrations, au cadre (8) de façon élastique et avec amortissement des vibrations.

2. Appui selon la revendication 1,
**caractérisé en ce que**
l'organe d'appui (10) est principalement en un élastomère ou caoutchouc ou caoutchouc naturel.

3. Appui selon la revendication 1 ou 2,
**caractérisé en ce que**
l'organe d'appui (10) de forme tubulaire est traversé axialement par une vis de fixation (17) en saillie du cadre ou vissée dans un filetage (16) du cadre (8), et
- une tête de vis (18), ou un écrou qui se visse sur la vis de fixation ou une pièce intermédiaire (19) interposée, sollicite l'organe d'appui (10) axialement contre le cadre (8) ou un élément intermédiaire appuyé au moins indirectement au cadre.

4. Appui selon l'une des revendications 1 à 3,
**caractérisé en ce que** l'organe d'appui (10) est cylindrique dans sa région médiane, axiale et élargie radialement dans ses zones frontales (11, 12) par exemple également avec une forme cylindrique et le récipient (1), dans au moins une région d'un emplacement de fixation (2, 2', 2", 2'") comporte une bride (13) en saillie avec un orifice d'appui (14), traversant et la bride (13) est installée axialement entre les régions frontales (11, 12) s'élargissant radialement d'un organe d'appui (10), associé, de façon que la région axiale médiane de l'organe d'appui (10) traverse l'orifice d'appui (14) de la bride (13) avec ou sans jeu radial.

5. Appui selon la revendication 4,
**caractérisé en ce que**
l'épaisseur de la bride (13) au moins dans la région d'un emplacement de fixation (2, 2', 2", 2'") est adaptée à la distance axiale des régions frontales élargies (11, 12) de l'organe d'appui (10) aux emplacements de fixation (2, 2', 2", 2"').

6. Appui selon l'une des revendications 1 à 5,
**caractérisé en ce que**
au moins par région, le réservoir (1) se trouve sous l'enceinte à bagages (26) arrière du véhicule automobile et au moins par région il est couvert par le couvercle (21) installé sous le fond de l'enceinte à bagages (20) pour être couvert au-dessus ou en-dessous, par exemple de manière étanche à l'eau.

7. Appui selon l'une des revendications 1 à 6,
**caractérisé en ce que**
le récipient (1) est réalisé de façon fermée de tous côtés et constitue ou comporte un réservoir de carburant ou au moins un accumulateur haute tension ou un conteneur d'un agent réducteur catalytique pour traiter et améliorer les gaz d'échappement du moteur du véhicule ou un récipient pour un gaz ou de l'hydrogène à l'état gazeux ou liquide ou d'un réformeur utilisé pour convertir l'essence en hydrogène.

8. Appui selon l'une des revendications 1 à 7,
**caractérisé en ce que**
le récipient (1) est un réservoir de carburant entouré par une enceinte humide (24) dans laquelle il peut y avoir de l'humidité en fonction de l'état météorologique.

9. Appui selon l'une des revendications 1 à 8,
**caractérisé en ce que**
le récipient (1) est un réservoir à carburant dans lequel débouche une conduite de carburant (22) qui traverse une ouverture du cadre (8) et une ouverture du passage de roue dans une paroi latérale de passage de roue (23), avec par exemple un élément de couverture (25) élastique qui couvre l'espace intermédiaire entre l'ouverture du cadre (8) et l'ouverture du passage de roue, alignée avec celui-ci dans la paroi latérale (23) du passage de roue et le rend étanche évitant ainsi toute éventuelle évaporation du réservoir (1) vers l'intérieur du véhicule.

10. Appui selon l'une des revendications 1 à 9,
**caractérisé en ce que**
l'orifice traversant (3) est réalisé essentiellement devant, au-dessus ou derrière l'essieu arrière du véhicule automobile.

11. Appui selon l'une des revendications 1 à 10,
**caractérisé en ce que**
l'orifice traversant réalisé principalement devant l'essieu arrière est délimité au moins à l'arrière par une traverse reliée aux longerons hauts ou l'orifice traversant réalisé principalement derrière l'essieu arrière est délimité au moins à l'avant par une traverse reliée aux longerons ou qui est délimité essentiellement par l'orifice traversant (3) réalisé au-dessus de l'essieu arrière, à l'avant et/ou à l'arrière chaque fois par une traverse (6, 7) reliée aux longerons (4, 5).
